# EUROPÄISCHE PATENTSCHRIFT

(11) **EP 0 698 337 B1**
(45) Veröffentlichungstag und Bekanntmachung des Hinweises auf die Patenterteilung: **17.11.1999**
(21) Anmeldenummer: 95113171.3
(22) Anmeldetag: 22.08.1995
(51) Int. Cl.: A01D 33/04

(54) **Verfahren zur Trennung von Feldfrüchten und Beimengungen**
Method for separation of cereals and admixture
Procédé pour séparer des produits agricoles et des impuretés

(30) Priorität: 23.08.1994 DE 4429868
(43) Veröffentlichungstag der Anmeldung: 28.02.1996
(73) Patentinhaber: Klintworth, Klaus, 21614 Buxtehude (DE); Klintworth, Johann, 21614 Buxtehude (DE)
(72) Erfinder: Klintworth, Klaus, 21614 Buxtehude (DE); Klintworth, Johann, 21614 Buxtehude (DE)
(74) Vertreter: Kador & Partner

(56) Entgegenhaltungen:
- US-A- 4 161 443

## Beschreibung

Die Erfindung bezieht sich auf ein Verfahren und eine Vorrichtung zur Trennung von Feldfrüchten und Beimengungen, bei dem das verschiedene Raumgewicht der zu trennenden Güter ausgenutzt wird.

In der Landwirtschaft sind heute für die verschiedenen Fruchtsorten Vollerntemaschinen im Einsatz, mit denen es zufriedenstellend möglich ist, die Früchte von den anderen Pflanzenteilen zu trennen. Allerdings ist es bislang nicht mit der gewünschten Sicherheit gelungen, beim praktischen Ernteeinsatz die Feldfrüchte, wie beispielsweise Tomaten, Rüben, Kartoffeln, Zwiebeln, zuverlässig von artfremden Verunreinigungen, wie Erdklumpen und Steine, zu befreien.

Es hat selbstverständlich nicht an Versuchen gefehlt, Erntemaschinen zu konstruieren, um u.a. mit verschiedenen mechanischen Lösungen eine entsprechende Trennung von Früchten und Verunreinigungen zu bewirken. Jedoch hat sich bislang keine Trenneinrichtung dieser Art in der Betriebspraxis durchsetzen können, da es insbesondere nicht gelingt, eine hohe Trennungsrate bis hin zu einer nahezu 100 %igen-Erfolgsquote zu gewährleisten. Als schwierig beherrschbar erweisen sich dabei hauptsächlich die unterschiedlichen Größen und Formen der Früchte bei der einzelnen Fruchtsorte und ihren Beimengungen, insbesondere der Steine.

Zu den mechanischen Trenneinrichtungen, die in der Landwirtschaft angewendet werden, gehören Maschinen mit Gummifingertransportbändern in Verbindung mit Abbürsteinrichtungen. Dabei gelangt das von Pflanzenresten und Erde vorgereinigte Erntegut auf ein mit Gummifingern besetztes Transportband, in das die schwereren Steine tiefer einsinken, und die Früchte, beispielsweise Kartoffeln, hauptsächlich auf den Gummifingern verweilen, von denen man sie dann abbürstet. Eine Weiterentwicklung dieser Methode beschreibt zum Beispiel die deutsche Offenlegungsschrift 35 05 043, bei der mit einer rotierenden höhen- und drehzahlverstellbaren Bürstenwalze die Kartoffeln und Steine vom Gummifingerband abgeworfen werden und dabei die spezifisch schwereren Steine, auch aufgrund ihrer größeren Einsinktiefe in die Gummifinger, eine kürzere Abwurfstrecke zurücklegen als die spezifisch leichteren Kartoffeln, und durch eine entsprechende Trennkante zwischen den verschieden weit fliegenden Früchten und ihren Verunreinigungen erfolgt die eigentliche Trennung.

In einer weiteren deutschen Offenlegungsschrift 38 22 144 wird eine Einrichtung zur Absonderung der Früchte von Bodenbeimengungen beschrieben. Diese Erfindung nutzt die Zentrifugalkraft, die für die Beimengungen größer als für die Früchte ist, da die Beimengungen eine höhere Dichte aufweisen. Über Bandförderer, die aufsteigend angeordnet sind, werden die Verunreinigungen, einschließlich beschädigter Früchte, abtransportiert.

Die bekannten mechanischen Systeme, beispielsweise um Kartoffeln von Steinen zu trennen, erreichen im Mittel nur einen Aussortierungserfolg von ca. 50 % der Steine. Daher verfügen moderne Kartoffelerntemaschinen über ein oder mehrere Verlesebänder, an denen von Hand die nach der mechanischen Trennung noch mitgeführten Verunreinigungen aussortiert werden. Die europäische Patentanmeldung mit der Veröffentlichungsnummer 04 82 316 A1 beschreibt eine derartige zeitgemäße Kartoffelerntemaschine, die dadurch gekennzeichnet ist, daß das Trennband, welches quer zur Krautkette verläuft, aus zwei gegenläufigen, von der Mitte zu den Seiten fördernden Trennabschnitten besteht, die zum Abwurf der Beimengungen zu unterschiedlichen Seiten der Maschine und zur Übergabe der Kartoffeln auf jeweils sich anschließende, von hinten nach vorne verlaufende Förder- und Verlesebänder ausgebildet sind.

Neben diesen mechanischen Trenneinrichtungen sind auch elektronische Vorrichtungen bekanntgeworden, die jedes einzelne Stück der Frucht bzw. Beimengung analysieren und anschließend mechanisch sortieren. Um bei diesem relativ komplizierten Verfahren hinreichende Durchsatzleistungen zu erzielen, arbeitet man mit einem Vielkanalsystem, bei dem selbstverständlich jeder Kanal einen eigenen Analysator besitzt. Durch diesen hohen Aufwand steigen die Kosten entsprechend, und eine Wirtschaftlichkeit im Vergleich zu der mechanischen Trennung in Kombination mit dem Nachverlesen von Hand, läßt sich zur Zeit noch nicht darstellen.

Weiterhin ist auch eine Trennung von Früchten und Steinen nach dem Prinzip der Luftsichtung vorstellbar. Allerdings setzt eine erfolgreiche Luftsichtung aufgrund der physikalischen Gegebenheiten ungefähr gleiche Außenabmessungen des Sortiergutes voraus. Bei einer relativ engen Größenvorsortierung in etwa 10 Stufen ist wiederum eine aufwendige Mehrkanaltechnik für das eigentliche Sichten anzuwenden, und damit sind erhöhte Kosten verbunden, die schließlich die Wirtschaftlichkeit und eine mögliche Vermarktung infrage stellen.

Der amerikanischen Schrift US-A-4 161 443, die als nächster Stand der Technik anzusehen ist, liegt ein anderes Prinzip zugrunde. In der hierin beschriebenen Vorrichtung werden Kartoffeln durch einen 45 Grad Impuls über ein Loch hinweg abgelenkt und bewegen sich anschließend im Wassertank wieder abwärts. Der Impuls wird hierbei durch Wasser, das aus den Düsen eines Rohres austritt, erzeugt.

Die Erfindung hat sich, ausgehend von dem beschriebenen Stand der Technik, die Aufgabe gestellt, einen völlig neuen Weg bei der Trennung der Feldfrüchte von ihren Beimengungen zu gehen und ein betriebssicheres Verfahren mit einem möglichst 100 %igen Sortierergebnis zu schaffen, das darüber hinaus auch kostengünstig und wirtschaftlich anwendbar ist.

Die Erfindung löst diese Aufgabe dadurch, daß die Trennung mit Hilfe einer Flüssigkeit unter Ausnutzung der unterschiedlichen Auftriebskräfte dieser im Raumgewicht sich unterscheidenden Trenngüter durchgeführt wird.

Der Erfindung liegt die Erkenntnis zugrunde, daß Feldfrüchte im Erntezustand ein Raumgewicht von ca. 1,2 kg/dm³ aufweisen und ihre Beimengungen, hauptsächlich Steine, ein Raumgewicht von mindestens 2,0 kg/dm³ haben. Das erfindungsgemäße Verfahren macht sich diesen Dichteunterschied bei der Trennung der Feldfrüchte von ihren Beimengungen bewußt zunutze und führt in einem neutralen Medium, nämlich einer Flüssigkeit unter Ausnutzung der unterschiedlichen Auftriebskräfte dieser im Raumgewicht sich unterscheidenden Trenngüter die eigentliche Sortierung mit einer Erfolgsrate von nahezu 100 % durch.

Erfindungsgemäß kann dies sehr einfach in einer Flüssigkeit geschehen, deren spezifisches Gewicht zwischen dem des Erntegutes, beispielsweise Kartoffeln, und dem der Beimengungen, beispielsweise Steine, liegt. Eine sichere Trennfunktion wäre demzufolge in einer Flüssigkeit gegeben, die ungefähr ein spezifisches Gewicht von 1,6 kg/dm³ aufweist. Dieses Raumgewicht liegt einerseits deutlich oberhalb des Raumgewichtes der Feldfrüchte und andererseits weit genug unterhalb des Raumgewichtes der Steine. Als Trennergebnis zeigen sich die Feldfrüchte schwimmend auf der Oberfläche dieser Flüssigkeit, während die Beimengungen auf den Behältergrund absinken.

Als zusätzliche Voraussetzung an die Flüssigkeit mit dem geeigneten spezifischen Gewicht von ca. 1,6 kg/dm³, ist ihre gesundheitliche Unbedenklichkeit für den Menschen und die Feldfrüchte zu stellen. Die Feldfrüchte dürfen weiterhin weder in geschmacklicher Hinsicht noch bezüglich ihrer Lagerfähigkeit durch das Benetzen mit der Flüssigkeit geschädigt werden. Da bisher nur Flüssigkeiten mit dem geeigneten spezifischen Gewicht, wie beispielsweise stark konzentrierte, wasserhaltige Lösungen von Natron-, Kalilauge und Solen verschiedener Salze, gefunden werden konnten, mangelt es nach den heutigen Erkenntnissen an einer geeigneten Trennflüssigkeit, die diese Vorbedingungen erfüllt. Es liegt aber im Sinne der Erfindung, eine entsprechende, gesundheitlich unbedenkliche Trennflüssigkeit mit dem gewünschten spezifischen Gewicht einzusetzen, sobald sie für eine Feldfrucht gefunden ist.

Hinsichtlich der gesundheitlichen Forderungen ist natürlich Wasser als Trennflüssigkeit besonders geeignet, da es sich gegenüber den Feldfrüchten völlig neutral verhält und auch für die menschliche Gesundheit in jeder Hinsicht unbedenklich ist. In überraschender Weise hat sich gezeigt, wenn man üblichem Wasser, wie es überall zur Verfügung steht und ungefähr ein spezifisches Gewicht von 1 kg/dm³ aufweist, in Bewegung versetzt, d.h. eine Strömungsgeschwindigkeit entgegen der Absinkrichtung der Feldfrüchte auflädt, daß es problemlos gelingt, einerseits die Feldfrüchte schwimmend an der Flüssigkeitsoberfläche zu sammeln und andererseits die Verunreinigungen, insbesondere Steine, auf den Behälterboden absinken zu lassen.

Eine bevorzugte Ausgestaltung des erfindungsgemäßen Verfahrens besteht demzufolge darin, die Trennung von Feldfrüchten und Beimengungen in einem Behälter vorzunehmen, der Wasser als Trennflüssigkeit enthält, und das Wasser mit einer vorzugsweise gegen die Sinkrichtung der Trenngüter gerichtete Strömung zu beaufschlagen. Dabei kann erfindungsgemäß die Strömungsgeschwindigkeit regelbar sein, und sie wird so eingestellt, daß die Feldfrüchte sicher an der Wasseroberfläche schwimmen, während die Beimengungen auf den Behälterboden absinken. Es hat sich beispielsweise für die Trennung von Kartoffeln und Steinen als günstig herausgestellt, eine Geschwindigkeitsenergie in das System einzubringen, das ungefähr einer zusätzlichen Auftriebskraft von 0,3 bis ca. 0,8 kg/dm³, vorzugsweise von ca. 0,5 bis 0.7 kg/dm³, entspricht. Somit erfahren die Feldfrüchte im Trennflüssigkeitsbehälter den entsprechenden Auftrieb, daß man sie nahe der Trennflüssigkeits- bzw. Wasseroberfläche in Schwebe hält und von hier aus mit einer entsprechenden Transporteinrichtung, beispielsweise einem Förderband, aus dem Flüssigkeitsbehälter abtransportiert. Die Beimengungen, bevorzugt Erdklumpen und Steine, sinken auf den Flüssigkeitsbehälterboden und werden von dort durch ein- oder mehrstufige Fördereinrichtungen aus dem Trennflüssigkeitsbehälter heraustransportiert. Es kann sich dabei zum Beispiel um ein Querförderband handeln, das die Verunreinigungen anschließend auf einen Elevator oder eine ähnliche Fördereinrichtung übergibt, die sie aus dem Trennflüssigkeitsbehälter heraushebt.

Gemäß der Erfindung wird die Strömungsgeschwindigkeit, die für die zusätzliche Auftriebskraft der Feldfrüchte im Wasser erforderlich ist, durch relativ einfache geeignete Einrichtungen erzeugt, wie beispielsweise einem Schaufel- oder Pumprad. Es läßt sich auch mit relativ einfachen Mitteln damit die Strömungsgeschwindigkeit des Wassers regeln, zum Beispiel kann die Drehzahl des Schaufel- oder Pumprades verändert werden, oder man kann den Austrittsquerschnitt des Wassers aus dem Schaufel- oder Pumpradgehäuse in den Wasserbehälter im Querschnitt regeln.

Es liegt im Sinne der Erfindung, die eingeregelte Wassergeschwindigkeit, die zur sicheren Trennung der Feldfrüchte und Beimengungen führt, konstant zu halten. Dies kann für die verschiedenen Feldfrüchte, wie beispielsweise Kartoffeln, Zwiebeln, Tomaten, in allen Fällen die gleiche Wasserströmungsgeschwindigkeit sein, oder sie wird von Fall zu Fall zu Beginn des Ernteeinsatzes einmal neu eingeregelt und dann für den Verlauf der weiteren Ernte beibehalten.

Gemäß der Erfindung können die Feldfrüchte, nachdem sie aus dem Trennflüssigkeits-/Wasserbehälter mit einer geeigneten Transporteinrichtung, z.B. Förderband, abtransportiert sind, auf weitere Transporteinrichtungen, wie beispielsweise Flüssigkeitsabtropfbänder, übergeben werden, um sie schließlich zum Trocknen durch Wind und Sonne auf dem Acker abzulegen.

Das Verfahren gemäß der Erfindung hat sich für das Trennen verschiedener Feldfrüchte, beispielsweise Kartoffeln, Rüben, Möhren, Zwiebeln, Tomaten, von ihren Beimengungen, hauptsächlich Erdklumpen und Steinen, bewährt. Insbesondere ist es jedoch für die Trennung von Kartoffeln und Steinen geeignet.

Eine bevorzugte Vorrichtung für die Anwendung des Verfahrens zur Trennung von Feldfrüchten und Beimengungen, die das verschiedene Raumgewicht der Trenngüter anwendet, besteht aus einem geeigneten Behälter, der direkt an eine übliche Vollerntemaschine angekoppelt ist, die wiederum über eine Transporteinrichtung, z.B. ein Förderband oder Gitterrollenband, die Feldfrüchte, einschließlich ihrer Beimengungen, am oberen Rand des Trennflüssigkeitsbehälters an der dem Vollernter zugekehrten Seite auf eine Zu- oder Aufgabevorrichtung ablegt. Von dort gelangt das Gemisch aus Feldfrüchten und Beimengungen in den tieferen Trennbereich des Flüssigkeitskeitsbehälters. Hier herrscht eine vom Behälterboden nach oben zur Wasseroberfläche gerichtete Strömung, die dazu beiträgt, daß die Feldfrüchte an der Oberfläche schwimmen bzw. sehr nahe an der Wasseroberfläche in Schwebe gehalten werden, während die Beimengungen, hauptsächlich Erdklumpen und Steine, zum Behältergrund absinken. Durch die Anordnung des Schaufel- bzw. Pumprades nahe dem Behälterboden ist die Strömung im gesamten Behälterraum so gerichtet, daß die Feldfrüchte nahe der Oberfläche in Richtung einer Austragsvorrichtung, beispielsweise eines wasserdurchlässigen Förderbandes, schwimmen und ungefähr mit der gleichen Geschwindigkeit, wie sie vom Vollernter angeliefert werden, den Wasserbehälter verlassen, um anschließend über ein oder mehrere Abtropfförderbänder entweder in einen Transportwagen oder Bunker gefördert zu werden, jedoch legt man sie bevorzugt zum Trocknen durch Wind und Sonne auf dem Acker ab.

Als Pumpeinrichtung zur Erzeugung der gewünschten Wasserströmung vom Behälterboden zur Wasseroberfläche, können grundsätzlich alle für diese Wasserqualität geeigneten Pumpeinrichtungen eingesetzt werden. Bevorzugt kommen jedoch wegen ihrer Unempfindlichkeit beim rauhen Landwirtschaftsbetrieb und weil sie außerdem kostengünstig sind, Schaufel- oder Pumpräder zum Einsatz. Dabei kann die Wasserzufuhr aus der Pumpeinrichtung über eine oder mehrere Öffnungen bzw. Düsen, gerichtet in den Trennwasserbehälter, eingeleitet werden. Damit ist es möglich, die gewünschte Aufwärtsströmung im Trennbereich des Flüssigkeitsbehälters genauer und betriebssicher einzustellen und gleichzeitig im oberen Behälterteil die Wasserrückführung zur Pumpeinrichtung so zu steuern, daß sie für den Feldfrüchtetransport zur Austragsvorrichtung beiträgt.

Die erfindungsgemäße Vorrichtung in einer bevorzugten Ausführungsform verfügt über eine Zugabeeinrichtung für die Feldfrüchte, einschließlich ihrer Beimengungen, in den Trennflüssigkeitsbehälter. Diese Aufgabevorrichtung ist am oberen Rand des Wasserbehälters angebracht, ungefähr diagonal gegenüber den Wasserzufuhröffnungen im unteren Bereich des Behälterteils mit der größten Wassertiefe.

Nachfolgend werden das erfindungsgemäße Verfahren und die Vorrichtung anhand von Beispielen und einer Darstellung näher erläutert.

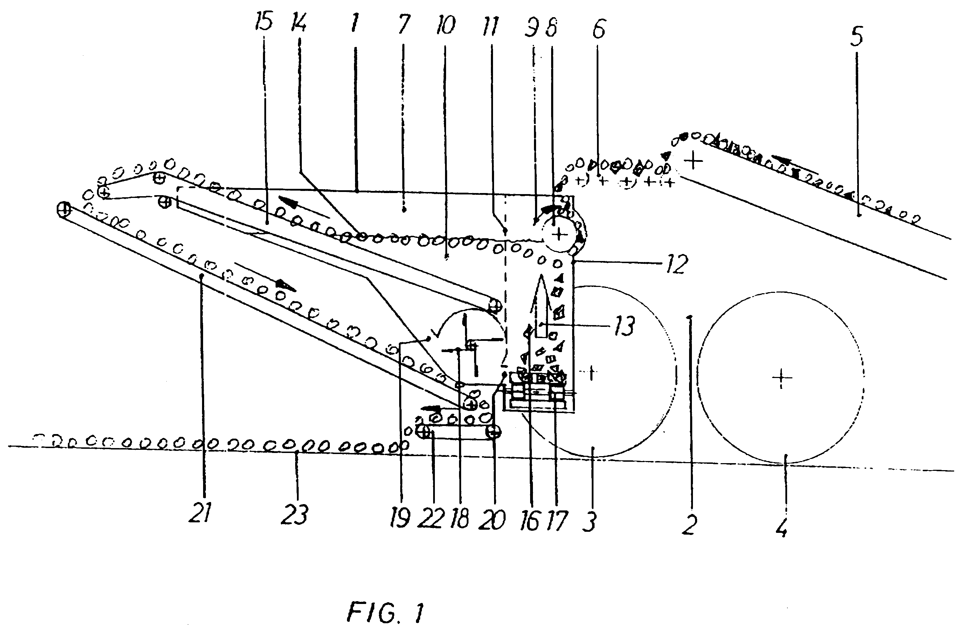

Die *Figur 1* zeigt in weitgehend schematischer Darstellung den Längsschnitt durch die Vorrichtung zur Trennung von Feldfrüchten und Beimengungen. Die Trennvorrichtung **1** ist durch nicht-dargestellte Ankopplungspunkte mit dem Vollernter, in diesem Fall ein Kartoffelroder **2**, verbunden. Der Vollernter ist schematisch gezeichnet und hauptsächlich durch die zwei Räder **3** und **4** skizziert. Über das Förderband **5** und die anschließenden Rollen **6** gelangen die Kartoffeln, einschließlich ihrer Beimengungen, zu der Trennvorrichtung und fallen dort am oberen Rand des Wasserbehälters **7** auf die Aufgabevorrichtung **8**, in diesem Fall eine Zuteilwalze, die sich in Pfeilrichtung **9** dreht. Von der Zugabevorrichtung wird das Mischgut Kartoffel und Beimengungen ohne große zusätzliche Geschwindigkeit in den Trennflüssigkeitsbehälter **7** mit dem Wasserbad **10** abgelegt.

In dem tiefen Teil des Wasserbades, der durch die gestrichelte Hilfslinie **11** zum flachen Behälterteil hin und der Behälterwand **12** zum Kartoffelroder hin begrenzt ist, wird eine nach oben gerichtete Wasserströmung, durch den Pfeil **13** dargestellt, aufrechterhalten. Diese Strömung **13** in Verbindung mit der Auftriebskraft des Wassers, bewirkt, daß die Kartoffeln **14** an die Wasseroberfläche und in Richtung des Abfuhrförderbandes **15** schwimmen. Die Steine **16** sinken aufgrund ihres höheren spezifischen Gewichtes auf die Austragsvorrichtung **17**, in diesem Fall ein Querförderband, das die Beimengungen, insbesondere Steine und Erdklumpen, auf eine nicht-dargestellte elevatorähnliche Austragsvorrichtung übergibt, die dieses Gut aus dem Wasserbehälter fördert.

Die Wasserströmung **13** wird durch das Schaufelrad **18** erzeugt, das Wasser im Bereich **19** ansaugt, und über die düsenähnliche Öffnung **20** mit der einstellbaren Geschwindigkeit in den tieferen Behälterteil leitet. Die Kartoffeln verlassen über das Abfuhrförderband **15** den Wasserbehälter und gelangen über das Abtropfband **21** zur Ablagevorrichtung **22**, mit der sie in den schematisch angedeuteten Reihen **23** auf dem Feld bzw. Acker abgelegt werden, um durch Wind und Sonne zu trocknen.

Gemäß der Erfindung kann die Trennvorrichtung in weiten Grenzen konstruktiv und hinsichtlich ihrer Einzeleinrichtungen, wie Zugabevorrichtung, Transport- und Förderbänder, sowie die Pumpeinrichtung, in weiten Grenzen variiert werden, ohne den Rahmen der Erfindung zu verlassen.

## Patentansprüche

1. Verfahren zur Trennung von Feldfrüchten (14) und spezifisch schwereren Beimengungen (16), bei dem die Trennung in einer Flüssigkeitsströmung (13) erfolgt, wobei ein Flüssigkeitsbehälter (7) verwendet wird, bestehend aus einem tiefen Behälterteil, in dem die Flüssigkeitsströmung (13) zur Flüssigkeitsoberfläche hin gerichtet ist, und einem flachen Behälterteil, dadurch gekennzeichnet, daß die Strömungsgeschwindigkeit in dem tieferen Behälterteil so eingeregelt wird, daß in diesem eine vom Behälterboden nach oben zur Flüssigkeitsoberfläche gerichtete Strömung herrscht, in der die spezifisch schwereren Beimengungen (16) entgegen der Strömungsrichtung in der Flüssigkeit absinken und die Feldfrüchte (14) zur Flüssigkeitsoberfläche aufgetrieben werden, und daß in dem flachen Behälterteil die Flüssigkeitsströmung so gerichtet ist, daß die Feldfrüchte (14) nahe der Flüssigkeitsoberfläche in Richtung einer Austragsvorrichtung (15) getrieben werden.

2. Verfahren nach Anspruch 1, dadurch gekennzeichnet, daß Kartoffeln von Steinen und Erdklumpen in einer Wasserströmung getrennt werden.

3. Verfahren nach den Ansprüchen 1 und 2, dadurch gekennzeichnet, daß die Kartoffeln aus dem Flüssigkeitsbehälter über Transportvorrichtungen, die als Flüssigkeitsabtropfbänder ausgebildet seien können, einer weiteren Transporteinrichtung oder einem Bunker zugeführt oder auf dem Acker abgelegt werden.

4. Vorrichtung zur Durchführung des Verfahrens nach Anspruch 1, bei der die Trennung in einem Flüssigkeitsbehälter (7) mit einer gegen die Flüssigkeitsoberfläche gerichteten Flüssigkeitsströmung (13) erfolgt, wobei die Strömung (13) durch eine Pumpeneinrichtung (18) erzeugt wird, und die Feldfrüchte (14), einschließlich der Beimengungen (16), über eine Aufgabevorrichtung (8) in den Flüssigkeitsbehälter (7) gelangen, dort die Trennung mit der gegen die Flüssigkeitsoberfläche gerichteten Strömung (13) erfolgt, und die Feldfrüchte (14) über das Abfuhrförderband (15) sowie die Beimengungen (16) mit der Austragsvorrichtung (17) aus dem Trennflüssigkeitsbehälter (7) gefördert werden, dadurch gekennzeichnet, daß der Flüssigkeitsbehälter (7) direkt einem Vollernter (2) nachgeschaltet ist und daß die Strömungsgeschwindigkeit in dem tiefen Behälterteil so eingeregelt wird, daß in diesem Behälterteil eine vom Behälterboden nach oben zur Flüssigkeitsoberfläche gerichtete Strömung herrscht, in der die spezifisch schwereren Beimengungen (16) entgegen der Strömungsrichtung in der Flüssigkeit absinken und die Feldfrüchte (14) zur Flüssigkeitsoberfläche aufgetrieben werden.

5. Vorrichtung nach Anspruch 4 dadurch gekennzeichnet, daß die Pumpeinrichtung für die Trennflüssigkeit, vorzugsweise Wasser, aus einem Schaufel- bzw. Pumprad (18) besteht.

## Claims

1. A method for separating crops (14) and impurities (16) of greater specific gravity, separation taking place in a liquid flow (13) using a liquid tank (7) comprising a deep tank part in which the liquid flow (13) is directed toward the liquid surface, and a shallow tank part, characterized in that the velocity of flow in the deeper tank part is adjusted so that a flow directed from the tank bottom upward to the liquid surface prevails therein, in which flow the impurities (16) of greater specific gravity drop contrary to the direction of flow within the liquid and the crop (14) is lifted to the liquid surface, and the liquid flow in the shallow tank part is directed in such a way that the crop (14) near the liquid surface is driven toward a discharge apparatus (15).

2. The method of claim 1, characterized in that potatoes are separated in a water flow from stones and clods of earth.

3. The method of claims 1 and 2, characterized in that the potatoes are fed from the liquid tank via transport devices, which can be formed as liquid draining bands, to a further transport device or a silo or deposited on the field.

4. An apparatus for carrying out the method of claim 1 wherein separation takes place in a liquid tank (7) with a liquid flow (13) directed toward the liquid surface, the flow (13) being produced by a pumping device (18), and the crop (14), including the impurities (16), passing via a charging apparatus (8) into the liquid tank (7), separation taking place there with the flow (13) directed toward the liquid surface, and the crop (14) being conveyed out of the separating liquid tank (7) via the removing conveyer band (15) and the impurities (16) with the discharge apparatus (17), characterized in that the liquid tank (7) directly follows a pick-up loader (2), and the velocity of flow in the deep tank part is adjusted so that a flow directed from the tank bottom upward to the liquid surface prevails in said tank part, in which flow the impurities (16) of greater specific gravity drop contrary to the direction of flow within the liquid and the crop (14) is lifted to the liquid surface.

5. The apparatus of claim 4, characterized in that the pumping device for the separating liquid, preferably water, consists of a bucket wheel or pump wheel (18).

## Revendications

1. Procédé pour séparer des produits agricoles (14) et des impuretés (16) d'un poids spécifie plus élevé, selon lequel la séparation s'effectue dans un écoulent de liquide (13), selon lequel on utilise un récipient a liquide (7), constitué par une partie profonde du récipient, dans laquelle l'écoulement de liquide (13) est dirigé vers la surface du liquide, et une partie peu profonde du récipient, caractérisé en ce que la vitesse d'écoulent dans la partie plus profonde du récipient est réglée de telle sorte que dans cette partie du récipient est présent un écoulement, qui est dirigé du fond du récipient vers le haut en direction de la surface du liquide et dans lequel les impuretés (16) d'un poids spécifique plus élevé tombent dans le liquide à l'encontre de la direction d'écoulement et les produits agricoles (14) sont entraînés vers le haut en direction de la surface du liquide, et que dans la partie peu profonde du récipient, l'écoulement de liquide est dirigé de telle sorte que les produits agricoles (14) sont entraînés à proximité de la surface du liquide en direction d'un dispositif de sortie (15).

2. Procédé selon la revendication 1, caractérisé en ce que des pommes de terre sont séparées de pierres et de mottes de terre dans un écoulement d'eau.

3. Procédé selon les revendications 1 et 2, caractérisé en ce que les pommes de terre sont envoyées depuis le récipient à liquide, par l'intermédiaire de dispositifs de transport qui peuvent être agencés sous la forme de bandes d'égouttage de liquide, à un autre dispositif de transport ou à un silo ou sont déposées sur le champ.

4. Dispositif pour la mise en oeuvre du procédé selon la revendication 1, selon lequel la séparation s'effectue dans un récipient à liquide (7) à l'aide d'un écoulement de liquide (13), qui est dirigé vers la surface du liquide, et dans lequel l'écoulement (13) est produit par un dispositif à pompe (18), et les produits agricoles (14), y compris les impuretés (16), parviennent par l'intermédiaire d'un dispositif d'alimentation (8) dans le récipient à liquide (7), que la séparation s'effectue dans ce récipient par l'écoulement (13) dirigé vers la surface du liquide et que les produits agricoles (14) sont entraînés par l'intermédiaire de la bande convoyeuse d'évacuation (15) et les impuretés (16) sont entraînées avec le dispositif de sortie (17) à partir du récipient à liquide de séparation (7), caractérisé en ce que le récipient à liquide (7) est installé directement en aval d'une arracheuse-chargeuse (2) et que la vitesse de circulation dans la partie profonde du récipient est réglée de telle sorte que dans cette partie du récipient il existe un écoulement qui est dirigé depuis le fond du récipient vers le haut en direction de la surface du liquide, écoulement dans lequel les impuretés (16) ayant un poids spécifique plus élevé tombent dans le liquide, en sens opposé de la direction d'écoulement et que les produits agricoles (14) sont entraînés vers le haut en direction de la surface du liquide.

5. Dispositif selon la revendication 4, caractérisé en ce que le dispositif à pompe pour le liquide de séparation, de préférence de l'eau, est constitué par une roue à aubes ou un rotor de pompe (18).
